(19) Europäisches Patentamt / European Patent Office / Office européen des brevets

(11) **EP 4 316 255 A1**

(12) **EUROPEAN PATENT APPLICATION**
published in accordance with Art. 153(4) EPC

(43) Date of publication:
**07.02.2024 Bulletin 2024/06**

(21) Application number: **22780808.6**

(22) Date of filing: **28.03.2022**

(51) International Patent Classification (IPC):
*A23G 1/38* (2006.01)    *A23L 5/00* (2016.01)

(52) Cooperative Patent Classification (CPC):
**A23G 1/38; A23L 5/00**

(86) International application number:
**PCT/JP2022/015173**

(87) International publication number:
**WO 2022/210597 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021   JP 2021057728**

(71) Applicant: **Fuji Oil Holdings Inc.**
**Izumisano-shi, Osaka 598-8540 (JP)**

(72) Inventor: **WATANABE, Shu**
**Izumisano-shi, Osaka 598-8540 (JP)**

(74) Representative: **Boult Wade Tennant LLP**
**Salisbury Square House**
**8 Salisbury Square**
**London EC4Y 8AP (GB)**

(54) **OILY FOOD PRODUCT**

(57) The present invention aims at providing a novel oil-based food product containing a legume-derived roasted powder material and a fermentation product powder.

EP 4 316 255 A1

**Description**

Technical Field

The present invention relates to an oil-based food product obtained using a legume-derived powder material and a method for producing the oil-based food product.

Background Art

Chocolate is a type of oil-based food product. Chocolate is composed of, for example, components derived from cacao, such as cacao mass, cacao butter, or cocoa powder, as well as sugar. Being liked for its unique flavor and texture, chocolate is consumed all over the world. However, areas where cacao can be harvested are limited, and chocolate produced using cacao as a main raw material is expensive.

People have been studying how to obtain an alternative material for cacao butter, which is one of the components derived from cacao, by subjecting palm oil or the like to fractionation or transesterification. Such an alternative material has become available at a lower cost than cacao butter.

Patent Document 1 discloses, as a cocoa powder substitute, a chocolate-like food product containing a soybean protein extraction residue as a main component.

Citation List

Patent Literature

Patent Document 1: JP 2015-027280 A

Summary of Invention

Technical Problem

The present inventors have studied a novel oil-based food product which has a reduced amount of components derived from cacao.

The method described in Patent Document 1 has a problem in terms of flavor and has not been able to entirely replace the cocoa powder.

Thus, an object of the present invention is to provide a novel oil-based food product having a reduced amount of components derived from cacao and also having excellent flavor.

Solution to Problem

The present inventors have conducted intensive studies to solve the above problems. The present inventors completed the present invention by including a legume-derived roasted powder material and a fermentation product powder.

That is, the present invention is

(1) An oil-based food product containing a legume-derived roasted powder material and a fermentation product powder;

(2) The oil-based food product according to (1), in which the legume-derived roasted powder material is a soybean-derived roasted powder material;

(3) The oil-based food product according to (2), in which the soybean-derived roasted powder material has an L* value in the color space of from 50 to 80;

(4) The oil-based food product according to (1) or (2), in which the fermentation product powder is a product resulting from powderizing a lactic acid fermentation product;

(5) The oil-based food product according to (3), in which the fermentation product powder is a product resulting from powderizing a lactic acid fermentation product;

(6) The oil-based food product according to (1) or (2), in which the oil-based food product contains an unrefined or semi-refined sugar;

(7) The oil-based food product according to (3), in which the oil-based food product contains an unrefined or semi-refined sugar;

(8) The oil-based food product according to (4), in which the oil-based food product contains an unrefined or semi-refined sugar;

(9) The oil-based food product according to (5), in which the oil-based food product contains an unrefined or semi-refined sugar;

(10) A method for producing an oil-based food product, the method using a legume-derived roasted powder material and a fermentation product powder;

(11) The method for producing an oil-based food product according to (10), in which the fermentation product powder is a product resulting from powderizing a lactic acid fermentation product;

(12) The method for producing an oil-based food product according to (10) or (11), in which a fermentation product is added and dried during roasting of a legume-derived powder material.

(13) The method for producing an oil-based food product according to (10), in which an unrefined or semi-refined sugar is used.

(14) The method for producing an oil-based food product according to (11), in which an unrefined or semi-refined sugar is used.

(15) The method for producing an oil-based food product according to (12), in which an unrefined or semi-refined sugar is used.

Advantageous Effects of Invention

According to the present invention, the oil-based food product can be provided with reduced components derived from cacao.

As a preferred aspect, the oil-based food product can be provided without using components derived from cacao. The resulting oil-based food product has a preferred flavor without an unpleasant flavor of the legume-derived powder material.

Description of Embodiments

An oil-based food product according to an embodiment of the present invention contains a legume-derived roasted powder material and a fermentation product powder. In the present specification, the legume-derived roasted powder material is a powder material produced by roasting a legume-derived powder material.

The present invention aims to provide an oil-based food product having a reduced amount of components derived from cacao. Thus, in the present specification, neither the legume-derived roasted powder material nor the fermentation product powder contains components derived from cacao beans.

In a preferred embodiment, the total amount of cacao mass and cocoa in the oil-based food product according to an embodiment of the present invention is less than 5 wt.%.

The legume-derived powder material that can be used in an embodiment of the present invention refers to powders in general derived from the whole and/or part of a bean or a pea, which is the seed state of a legume.

Examples of the legume include soybean, mung bean, pea, and chickpea.

More specifically, as a type of the legume-derived powder material, examples of a soybean-derived powder material include soybean powders such as whole-fat soybean powder and defatted soybean powder, soy protein isolate, soy protein concentrate, and soy milk powder. Examples of the soybean powders include ground soybean, a product obtained by subjecting soybeans to wet-grinding in an aqueous system and then performing drying, and a product obtained by suspending soybean powder in an aqueous system and then performing drying.

The soybean-derived powder material preferably has a crude protein mass of from 10 to 90 wt.%, more preferably from 20 to 70 wt.%. When a soybean-derived roasted powder material obtained by roasting the soybean-derived powder material prepared to have the aforementioned protein content is used, a favorable flavor can be given to the resulting oil-based food product. Note that, "crude protein mass" is a value measured as a percentage of a sample and expressed in terms of dry matter, and the value is obtained by determining a total nitrogen content in a sample by the Kjeldahl method and multiplying the total nitrogen content by a coefficient of 6.25.

Preferable examples of the soybean-derived powder material include soybean powders and soy milk powder.

In a more preferred embodiment, the soybean-derived powder material is preferably a whole-fat soybean powder having an NSI (to be described later), which is commonly used as an index of protein solubility, of from 10 to 70, more preferably from 20 to 60.

The term "NSI" in the present invention means "nitrogen soluble index". More specifically, NSI is expressed as a proportion (wt.%) of water-soluble nitrogen (crude protein) to the total nitrogen content based on a predetermined method. In the present invention, NSI is a value measured based on the following method.

NSI Measurement Method

100 ml of water is added to 2.0 g of a sample, and extraction with stirring is performed at 40°C for 60 minutes. Then, the mixture is centrifuged at 1400 × g for 10 minutes, resulting in a supernatant 1. Another 100 ml of water is added to the remaining precipitate, and extraction with stirring is performed at 40°C for 60 minutes. Then, the mixture is centrifuged at 1400 × g for 10 minutes, resulting in a supernatant 2. The supernatant 1 and the supernatant 2 are combined, and water is added to bring the total volume to 250 ml. After the mixture is filtered with No. 5A filter paper, the nitrogen content of the filtrate is measured by the Kjeldahl method. At the same time, the nitrogen content in the sample is measured by the Kjeldahl method, and the proportion of the nitrogen recovered as the filtrate (water-soluble nitrogen) to the total nitrogen in the sample is expressed in wt.% and is defined as the NSI.

The soybean-derived roasted powder material includes roasted soybean flour obtained by roasting at around 220°C for approximately 30 seconds. However, from the perspective of being able to achieve a flavor and a color suitable for the oil-based food product according to an embodiment of the present invention, which are a flavor more fragrant than that of roasted soybean flour and a color darker than that of roasted soybean flour, the soybean-derived roasted powder material is more preferably roasted darker than roasted soybean flour.

The roasting conditions are, for example, a temperature of preferably from 100°C to 250°C, more preferably from 120°C to 250°C, and even more preferably from 150°C to 220°C. The roasting time is not limited because it can be adjusted as appropriate to achieve different flavors of the resulting soybean-derived roasted powder material. However, from the perspective of being able to impart a flavor more fragrant than that of roasted soybean flour and a color darker than that of roasted soybean flour, the roasting time is preferably 10 minutes or longer, more preferably 20 minutes or longer. The temperature and time vary depending on the equipment used for roasting. Thus, the temperature and time are not limited to the temperatures and times described above and can be adjusted and employed as appropriate to achieve a desired color and flavor of the soybean-derived roasted powder material.

The equipment used for roasting is preferably equipped with a stirring blade to achieve uniform mixing and heating. The heat source may be either gas heating or induction heating (IH) as long as temperature control can be performed. The heat source is preferably IH from the viewpoint of easy temperature control.

The color of the soybean-derived roasted powder material can be visually determined. As a preferred aspect, for the degree of roasting, the heating conditions can be adjusted using an L* value in the color space as an indicator. The L* value in the color space is also not limited. The L* value in the color space is measured using a color difference meter, such as a colorimetric color difference meter (CR-400 available from Konica Minolta, Inc., or ZE-6000 available from Nippon Denshoku Industries Co., Ltd.).

In a preferred embodiment, the L* value in the color space of the soybean-derived roasted powder material is from 50 to 80, more preferably from 50 to 70. The L* value in the color space of a commercially available roasted soybean flour measured under the same conditions is 82.

Various legume-derived roasted powder materials prepared by a production method that corresponds to that of the soybean-derived roasted powder material described above and that uses a legume other than soybeans can also be used.

The oil-based food product according to an embodiment of the present invention contains the fermentation product powder. By containing the fermentation product powder, the oil-based food product can be imparted with a desirable flavor derived from a fermentation product. Various fermentation product powders can be used without limitation from the perspective of being able to impart flavor. The fermentation product may be added and dried at the time of roasting the legume-derived powder material. This timing is preferred in that process control can be performed at the same time and the process can be simplified.

The fermentation product powder is preferably a product resulting from powderizing a lactic acid fermentation product.

In an embodiment of the present invention, the lactic acid fermentation product is preferably a low-fat soy milk lactic acid fermentation product.

Low-fat soy milk refers to a type of soy milk with reduced fat content. The low-fat soy milk used in an embodiment of the present invention is a low-fat soy milk in which the fat content is reduced to 2.5 wt.% or less, preferably 2 wt.% or less, more preferably 1.5 wt.% or less based on packaging claims. Low-fat soy milk is a soybean material with characteristics equivalent to those of low-fat cow's milk. Low-fat soy milk not only makes it possible to reduce the calorie content of soy milk, but can also reduce a deterioration of flavor due to soybean fats. The fat content of the low-fat soy milk is preferably 40 wt.% or less, more preferably 20 wt.% or less, and even more preferably 10 wt.% or less relative to the protein content of the low-fat soy milk. The low-fat soy milk according to an embodiment of the present invention includes soy milk prepared by subjecting whole soybeans or defatted soybeans to extraction with water and removing soy pulp, which is an insoluble fiber. The low-fat soy milk according to an embodiment of the present invention also includes a slurry-like product obtained by not removing soy pulp from soy milk and finely pulverizing the soy pulp. Of these, the soy milk from which soy pulp has been removed is preferred.

Measurement Method of Fat Content of Low-Fat Soy Milk

A sample (W) is subjected to extraction with a mixed solvent of chloroform and methanol (chloroform:methanol = 2:1 in volume ratio) at normal pressure boiling point for 30 minutes. Then, the resulting extract is dehydrated with anhydrous sodium sulfate and redissolved in petroleum ether. The resulting product is centrifuged, and the ether layer is collected and placed in a flask (W1) having a known weight. The ether is distilled off, and the dry weight (the weight of the flask after the ether is distilled off) (W2) is measured. A value obtained by the following equation using the measured values of W, W1, W2, and the dry matter weight (W3) of the sample (W) is defined as the fat content (%/dry).

$$\text{Fat content } (\%/\text{dry}) = [\{(W2 - W1)/W \times 2.5 \times 100\}/W3 \times 100 \ (\%)]$$

The solvent extraction device to be used can be "Soxtec" available from FOSS. The above measurement method is referred to as a "chloroform/methanol mixed solvent extraction method".

Method for Producing Low-Fat Soy Milk

The soybean raw material of the low-fat soy milk may be in the form of, for example, whole soybeans, halved soybeans, grits, or powder. In addition, soybean raw material that has been defatted or has its fat content reduced in advance can also be preferably used as the soybean raw material. The low-fat soy milk can be prepared using a known production method. For example, a method of subjecting soybeans to defatting with a solvent such as hexane or ethanol and subjecting the defatted soybeans to extraction with water can be preferably used. For the extraction with water, a general method can be used, such as a method of adding an aqueous medium to raw material soybeans, stirring and grinding the mixture to form a slurry, and separating and removing the insoluble fraction (soy pulp) by centrifugation, filtration, or the like. Alternatively, the low-fat soy milk may be obtained by a method of subjecting whole soybeans or reduced-fat soybeans to extraction with water, and subjecting the resulting product that is in a slurry state or that from which soy pulp is removed to a defatting operation by solvent extraction, membrane treatment, or centrifugation. Powderized low-fat soy milk that is dissolved in water may also be used. In the extraction with water, water is added in an amount of preferably from approximately 3 times to 20 times by weight, and more preferably from approximately 4 times to 15 times by weight, relative to the soybean raw material. The higher the ratio of water added, the higher the extraction rate of water-soluble components and the better the separation. However, when the ratio of water added is too high, concentration is required, which is costly. Further, when the extraction treatment is repeated twice or more, the extraction rate of the water-soluble components can be further increased. The extraction temperature is not limited. In order to efficiently extract proteins, the extraction is preferably performed at from 5°C to 98°C. The low-fat soy milk may also be obtained by subjecting whole soybeans to extraction with water, and subjecting the resulting product that is in a slurry state or that from which soy pulp is removed to a defatting operation by solvent extraction or membrane treatment. The method disclosed in JP 2012-016348 A can also be used. That is, water is added to fat-containing soybeans having a fat content of 15 wt.% or greater per dry matter and a nitrogen solubility index (NSI) of from 20 to 77 to prepare a suspension; then, solid-liquid separation is performed to transfer neutral fats and polar fats to the insoluble fraction and remove the neutral fats and polar fats, and the water-soluble fraction containing proteins and sugars is recovered. The low-fat soy milk prepared by this method has a total content of proteins and carbohydrates per dry matter of 80 wt.% or greater and a fat content (content as the amount extracted with a chloroform/methanol mixed solvent) of less than 10 wt.% relative to the protein content. Here, the protein content refers to a value obtained by multiplying the nitrogen content measured by the Kjeldahl method by a nitrogen conversion factor of 6.25. Further, the fat content may be adjusted by blending soy milk or soybean oil having a high fat content with soy milk having a low fat content.

Lactic acid bacteria used to produce the low-fat soy milk lactic acid fermentation product according to an embodiment of the present invention has an effect of improving the unpleasant taste of plant raw materials such as soy milk and soy whey. In an embodiment of the present invention, lactic acid fermentation (anaerobic fermentation or aerobic fermentation) is preferably performed by adding lactic acid bacteria or the like to plant raw materials such as soy milk (including low-fat soy milk) or soy whey (including low-fat soy whey).

The bacteria used in the lactic acid fermentation are preferably Lactobacillus bacteria, such as Lactobacillus brevis (Lb. brevis), Lactobacillus acidophilus (Lb. acidophilus), Lactobacillus casei (Lb. casei), Lactobacillus reuteri (Lb. reuteri), Lactobacillus delbruekii subspecies bulgaricus (Lb. delbruekii ssp. Bulgaricus), Lactobacillus plantarum (Lb. plantarum), Lactobacillus buchneri (Lb. buchneri), Pediococcus acidilactici (Ped. acidilactici), and Lactobacillus helveticus (Lb. helveticus).

The bacteria used in the lactic acid fermentation are preferably Streptococcus bacteria, such as Streptococcus thermophilus.

The bacteria used in the lactic acid fermentation are preferably Lactococcus bacteria, such as Lactococcus lactis, Lactococcus lactis subspecies lactis (Lactococcus lactis ssp. lactis), and Lactococcus lactis subspecies cremoris (Lactococcus lactis ssp. cremoris).

The bacteria used in the lactic acid fermentation are more preferably Lactococcus lactis.

In the lactic acid fermentation according to an embodiment of the present invention, one type of the lactic acid bacteria selected from the above is used, or two or more types of the lactic acid bacteria are used in combination.

In a preferred embodiment, the oil-based food product according to an embodiment of the present invention contains an unrefined or semi-refined sugar. Examples of the unrefined or semi-refined sugar include Sanonto sugar (Japanese light brown sugar), coarse crystal medium soft sugar, non-centrifugal sugar, raw sugar, honey, molasses, and maple sugar. One or more sugars selected from these sugars can be used. Of these sugars, examples of the non-centrifugal sugar include cane sugar and brown sugar. Sanonto sugar, coarse crystal medium soft sugar, cane sugar, brown sugar, raw sugar, and maple sugar are preferable, and Sanonto sugar, cane sugar, brown sugar, and maple sugar are more preferable. Such sugar may be used in combination.

The content of the legume-derived roasted powder material in the oil-based food product is preferably from 10 wt.% to 50 wt.%, more preferably from 10 wt.% to 40 wt.%, and even more preferably from 20 wt.% to 40 wt.%.

In a preferred embodiment, the legume-derived roasted powder material is a soybean-derived roasted powder material, and the content of the soybean-derived roasted powder material in the oil-based food product is preferably from 10 wt.% to 50 wt.%, more preferably from 10 wt.% to 40 wt.%, and even more preferably from 20 wt.% to 40 wt.%.

The content of the fermentation product powder in the oil-based food product is preferably from 0.1 wt.% to 20wt.%, more preferably from 3 wt.% to 15 wt.%, and even more preferably from 5 wt.% to 10 wt.%.

The content of the unrefined or semi-refined sugar in the oil-based food product is preferably from 1 wt.% to 40 wt.%, more preferably from 3 wt.% to 30 wt.%, even more preferably from 5 wt.% to 30 wt.%, and still more preferably from 5 wt.% to 25 wt.%.

The sugar to be blended in addition to the unrefined or semi-refined sugar is not limited, and examples thereof include sucrose, maltose, lactose, reducing sugars, various oligosaccharides, and various sugar alcohols. These may be used alone or in a combination of two or more types thereof.

In addition to those described above, raw materials can be used in the oil-based food product without limitation. The composition of chocolate, a representative oil-based food product, can also be applied as a reference. In one instance, a milk component, an oil and/or fat, and/or any other edible material can be appropriately combined. Examples of any other additive include an emulsifier, an antioxidant, and a flavoring, but the type and amount are not limited, and addition of these may be omitted.

The oil and/or fat that can be used is exemplified by vegetable oils and fats, such as rapeseed oil, soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid-bound oils and fats (MCT), shea butter, shea fat, and sal fat; animal oils and fats, such as milk fat, beef tallow, lard, fish oil, and whale oil; algal oils; and hydrogenated oils, fractionated oils, hydrogenated fractionated oils, fractionated hydrogenated oils, processed oils and fats obtained by transesterification and/or the like of those; and furthermore mixed oils and fats of these.

In the oil-based food product according to an embodiment of the present invention, a cacao butter equivalent is desirably used to give a preferred hardness. The cacao butter equivalent is also called hard butter, and its type may be either a tempering type or a non-tempering type. According to various qualities required for the oil-based food product, any other oil and/or fat can be appropriately selected and used in combination.

The oil-based food product according to an embodiment of the present invention can be produced by a production process of chocolate and similar products (such as a mixing step, rolling, conching treatment, and a molding cooling and solidifying step).

Examples

Examples of the present invention will be shown below, and the present invention will be described in more detail. Note that in the examples, values expressed as a percentage and a part are all on a mass basis.

Legume-Derived Powder Material Used

The legume-derived powder material used was a whole-fat soybean powder having an NSI of 60 and a crude protein content of 38.0%, which is a soybean-derived powder material.

Lactic Acid Fermentation Product Used

The lactic acid fermentation product used was a low-fat soy milk lactic acid fermentation product produced by the following procedure.

76 parts of a low-fat soy milk ("Bimitounyu" available from Fuji Oil Co., Ltd., which has a dry matter content of 10.0%, a protein content per dry matter of 54.0%, a fat content per dry matter of 5%, and a fat to protein ratio of 0.1 in terms of mass), 9.6 parts of dextrin (available from Matsutani Chemical Industry Co., Ltd.), and 14.4 parts of water were mixed, heated and stirred at 60°C for 5 minutes, sterilized at from 70 to 80°C, and cooled to 24°C.

To this prepared liquid, 0.01% of a lactic acid bacteria starter obtained by mixing Lactobacillus bulgaricus and Streptococcus thermophilus was added, and the mixture was fermented at from 37 to 40°C for approximately 5 hours. After the fermentation, the mixture was homogenized with a homogenizer at 5 MPa, sterilized at from 70 to 80°C, and then cooled to 24°C, resulting in a low-fat soy milk lactic acid fermentation product (having a dry matter content of 17.2%).

Method of Roasting Powder Material 1 to Powder Material 4

- The soybean-derived powder material was roasted using a tabletop heating stirrer (available from Kajiwara Inc.) at a wall temperature of from 200°C to 220°C for from 20 to 40 minutes. The product temperature during roasting was from 150°C to 160°C.
- The wall temperature was lowered to 120°C, the low-fat soy milk lactic acid fermentation product prepared as above was added in accordance with a blending amount presented in Table 1, and heating and drying was carried out for from 20 minutes to 30 minutes (resulting in a low-fat soy milk lactic acid fermentation product powder which was the fermentation product powder).
- Powder materials 1 to 4, which were the legume-derived roasted powder material containing the fermentation product powder, were obtained by the above procedure. Note that, the soybean-derived powder material described above was used as the powder material C without being roasted.

[Table 1]

| | Powder material 1 | Powder material 2 | Powder material 3 | Powder material 4 | Powder material C |
|---|---|---|---|---|---|
| Blending amount (parts by weight) of low-fat soy milk lactic acid fermentation product to 100 parts by weight of soybean-derived powder material | 20 | 30 | 40 | 50 | - |
| Blending ratio of fermentation product powder in powder material (value calculated in terms of dry matter) | 3.3% | 4.9% | 6.4% | 7.9% | - |
| Examples/comparative example using obtained powder material | Example 1 | Example 2 | Example 3 | Example 4 | Comparative Example |

Method for Preparing Oil-based Food Product

Oil-based food products of Examples 1 to 4 and Reference Example were prepared using the prepared powder materials 1 to 4 and C.

1. In accordance with the blending ratio presented in Table 2, all the powders, a portion of the oil and/or fat that had been melted, and a part of the flavoring were blended. Note that, a hard butter (product name "Melano NEW SS7" available from Fuji Oil Co., Ltd.) was used as the oil and/or fat.
2. The mixture was stirred in a mixer until it became dough-like (which took from 5 to 10 minutes), resulting in a dough to be placed into a roll refiner.
3. The above dough was refined by the roll refiner, resulting in rolled flakes. The particle size of each of the rolled flakes was from 20 to 30 μm.
4. The remaining oil and/or fat and lecithin were added, and mixing was carried out, turning the mixture into a liquid state.
5. The mixture in a liquid state was tempered, poured into a mold, and solidified at 5°C.
6. The mixture was left in a room at from 18 to 20°C for from 1 to 3 hours.

[Table 2]

|  | Trial formulation (unit: parts by weight) |
| --- | --- |
| Powder materials 1 to 4 and C | 31.0 |
| Cane sugar | 12.0 |
| Powdered brown sugar | 1.5 |
| Sugar | 16.5 |
| Oil and/or fat | 39.0 |
| Lecithin | 0.4 |
| Flavoring | 0.03 |

Flavor Evaluation Result

Table 3 describes the flavor characteristics of each oil-based food product in comparison with Comparative Example.

All of Examples had a suppressed soybean odor and obvious fragrance. Harshness and bitterness were both suppressed, resulting in a good flavor.

As described in Table 3, each of Example 1 to Example 4 has its own flavor characteristics, and a suitable flavor can be selected and prepared to accommodate different preferences.

[Table 3]

|  | Flavor characteristics |
| --- | --- |
| Comparative Example | The soybean odor is obvious. |
| Example 1 | As compared with Comparative Example, Example 1 had a suppressed soybean odor and obvious fragrance. Harshness and bitterness were both suppressed, resulting in a good flavor. Example 1 had a richness considered to be derived from the fermentation product. Example 1 had a well-rounded flavor profile. |
| Example 2 | As compared with Comparative Example, Example 2 had a suppressed soybean odor and obvious fragrance. Harshness and bitterness were both suppressed, resulting in a good flavor. Example 2 had a richness considered to be derived from the fermentation product. Although the fragrance was slightly weak, Example 2 had a well-rounded flavor profile with good balance. |
| Example 3 | As compared with Comparative Example, Example 3 had a suppressed soybean odor and obvious fragrance. Harshness and bitterness were both suppressed, resulting in a good flavor. Example 3 had an intense richness considered to be derived from the fermentation product. Although the fragrance was slightly weak, Example 3 had a note of caramel flavor. |
| Example 4 | Compared to Example 3, Example 4 had a stronger note of caramel flavor. In addition, the fragrance felt even weaker. |

Roasting Conditions and L* Value in Color Space

The color at the time of roasting using a tabletop heating stirrer (available from Kajiwara Inc.) at a wall temperature of from 200°C to 220°C was measured.

The legume-derived powder material used was a whole-fat soybean powder having an NSI of 60 and a crude protein content of 38.0%, which is a soybean-derived powder material. The color before heating was compared with a commercially available roasted soybean flour.

As described in Table 4, the L* value in the color space of the soybean-derived roasted powder material was from 50 to 80. This L* value is clearly different from that of the commercially available roasted soybean flour.

Note that, the color was not changed by the inclusion of the fermentation product powder.

[Table 4]

|  | L* value | a* | b* |
|---|---|---|---|
| Before heating | 92.1 | -2.6 | 19.2 |
| Roasting for 20 minutes | 67.8 | 8.3 | 34.5 |
| Roasting for 40 minutes | 62.3 | 10.5 | 36.2 |
| Roasting for 60 minutes | 58.4 | 11.9 | 36.2 |
| Roasted soybean flour | 82.4 | 3.4 | 25.9 |

Industrial Applicability

According to the present invention, the novel oil-based food product can be provided.

**Claims**

1. An oil-based food product comprising a legume-derived roasted powder material and a fermentation product powder.

2. The oil-based food product according to claim 1, wherein the legume-derived roasted powder material is a soybean-derived roasted powder material.

3. The oil-based food product according to claim 2, wherein the soybean-derived roasted powder material has an L* value in the color space of from 50 to 80.

4. The oil-based food product according to claim 1 or 2, wherein the fermentation product powder is a product resulting from powderizing a lactic acid fermentation product.

5. The oil-based food product according to claim 3, wherein the fermentation product powder is a product resulting from powderizing a lactic acid fermentation product.

6. The oil-based food product according to claim 1 or 2, wherein the oil-based food product comprises an unrefined or semi-refined sugar.

7. The oil-based food product according to claim 3, wherein the oil-based food product comprises an unrefined or semi-refined sugar.

8. The oil-based food product according to claim 4, wherein the oil-based food product comprises an unrefined or semi-refined sugar.

9. The oil-based food product according to claim 5, wherein the oil-based food product comprises an unrefined or semi-refined sugar.

10. A method for producing an oil-based food product, the method using a legume-derived roasted powder material and a fermentation product powder.

11. The method for producing an oil-based food product according to claim 10, wherein the fermentation product powder is a product resulting from powderizing a lactic acid fermentation product.

12. The method for producing an oil-based food product according to claim 10 or claim 11, wherein a fermentation product is added and dried during roasting of a legume-derived powder material.

13. The method for producing an oil-based food product according to claim 10, wherein an unrefined or semi-refined sugar is used.

14. The method for producing an oil-based food product according to claim 11, wherein an unrefined or semi-refined sugar is used.

15. The method for producing an oil-based food product according to claim 12, wherein an unrefined or semi-refined sugar is used.

## INTERNATIONAL SEARCH REPORT

| International application No. |
|---|
| **PCT/JP2022/015173** |

### A. CLASSIFICATION OF SUBJECT MATTER

*A23G 1/38*(2006.01)i; *A23L 5/00*(2016.01)i
FI:  A23L5/00 L; A23G1/38

According to International Patent Classification (IPC) or to both national classification and IPC

### B. FIELDS SEARCHED

Minimum documentation searched (classification system followed by classification symbols)

A23G1/38; A23L5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-215406 A (FUJI OIL CO., LTD.) 30 August 2007 (2007-08-30)<br>claim 1, paragraphs [0020]-[0024] | 1-3, 6, 7, 10, 13 |
| A | | 4, 5, 8, 9, 11, 12, 14, 15 |
| X | JP 2017-18120 A (OTSUKA PHARMACEUT. CO., LTD.) 26 January 2017 (2017-01-26)<br>claim 1, paragraphs [0222], [0502] | 1-11, 13, 14 |
| A | | 12, 15 |
| A | WO 2007/023800 A1 (YAMADA, Yasuyuki) 01 March 2007 (2007-03-01)<br>paragraphs [0112]-[0124] | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/015173**

| Patent document cited in search report | Publication date (day/month/year) | Patent family member(s) | Publication date (day/month/year) |
|---|---|---|---|
| JP 2007-215406 A | 30 August 2007 | (Family: none) | |
| JP 2017-18120 A | 26 January 2017 | US 2011/0033564 A1 claim 1, paragraphs [0297], [0517] WO 2008/153158 A1 | |
| WO 2007/023800 A1 | 01 March 2007 | US 2008/0213412 A1 paragraphs [0258]-[0261] EP 1920667 A1 | |

Form PCT/ISA/210 (patent family annex) (January 2015)

**REFERENCES CITED IN THE DESCRIPTION**

**Patent documents cited in the description**

- JP 2015027280 A
- JP 2012016348 A